# EUROPEAN PATENT APPLICATION

(11) **EP 2 966 266 A1**
(43) Date of publication of application: **13.01.2016**
(21) Application number: 15174811.8
(22) Date of filing: 01.07.2015
(51) Int. Cl.: F01D 15/10, F02K 1/06, F02K 3/04, F02C 7/10, F02C 7/143, F01D 13/00, B64D 27/12, B64D 27/18, B64D 27/20, B64D 27/02

(54) **TWO-PART GAS TURBINE ENGINE**

(30) Priority: 09.07.2014 GB 201412188
(71) Applicant: Rolls-Royce plc, London SW1E 6AT (GB)
(72) Inventor: Rolt, Andrew, Derby, Derbyshire DE24 8BJ (GB)
(74) Representative: Rolls-Royce plc

(57) **Abstract**

A gas turbine engine propulsion system (10) in which a first propulsive unit (12) has a core engine (42,44,46) and a first low pressure turbine (24) arranged to be driven by combustion products from the core engine. The first propulsive unit also has a first fan rotor (32) and a first fan shaft drivingly connecting the first turbine (24) and the first fan rotor (32). The propulsion system also has a further turbine (22) arranged in flow series with the first turbine (24) and a second propulsive unit (18) spaced from the first propulsive unit (12). The second propulsive unit has a second fan rotor (28) driven by the rotational output of the further turbine (22). The further turbine may be located in the second propulsive unit and may be in fluid communication with the first turbine (24) via an inter-turbine duct (26).

## Description

The present invention relates to gas turbine engines and more particularly to a gas turbine engine configuration having a plurality of propulsive rotors arranged to provide thrust in parallel.

In order to improve engine efficiency for subsonic, typically commercial, aircraft it is desirable to increase the bypass ratios of turbofan engines. Accordingly, it would at first sight seem desirable to fit larger diameter, lower pressure ratio fans to increase engine overall mass flow and to improve propulsive efficiency and reduce noise.

However there are a number of practical factors that affect the size of fans that can be used. Larger fans would require larger, multi-stage low-pressure turbines in order to drive them. A larger fan may require a larger diameter and longer nacelle with increased drag and a heavier thrust reverser. Furthermore the size of fan/nacelle that can be accommodated for a typical under-wing installation is limited and so the airframe design would need to be compromised in order to accommodate such over-sized fans. The weight and drag increases associated with such over-sized fans would tend to negate the fuel-burn benefits.

As an alternative solution to increasing fan diameter, it has been previously proposed, for example in UK Patent No. 2400411 (ROLLS ROYCE PLC) that a gas turbine engine can be modified to drive two or more fans. Driving parallel flow fans can allow a reduction in the total number of turbine stages and/or turbine blades required and can increase turbine efficiency by reducing the hub/tip ratios of the low-pressure turbines relative to a conventional engine of comparable overall bypass ratio and core technology. This enables a very high bypass ratio engine to be produced without needing to have either a geared fan or an excessive number of low-pressure turbine blades and/or turbine stages, which would result in higher weight and installed drag penalties.

However the installation of a multiple-fan nacelle design in an under-wing configuration creates complications and is liable to require a modified pylon arrangement which would create increased interference drag with the wing. The engine mounting arrangement may require crossbeams or "hangers" to support the multiple fans and associated bypass ducts, which is structurally inefficient and could hamper maintenance access to the core engine due to the presence of the second bypass duct. The side-by-side design of the bypass ducts and thrust reversers causes problematic asymmetric thrust loads and bending moments. Also, the non-parallel fan shafts could generate additional shaft-bending and bearing loads and could reduce the aerodynamic efficiency and surge margins of the fans and possibly also of the core compressors.

Thus it can be appreciated that the modification of a conventional, single fan engine design to achieve the above-described advantages provides a complex problem in which potential benefits and complications need to be offset in order to arrive at a suitable proposal.

US2002189230 describes a variable cycle propulsion system for a supersonic airplane, the system comprising at least one engine having means for producing exhaust gas and a gas exhaust nozzle for generating thrust for supersonic flight speeds, and at least one separate auxiliary propulsion assembly dissociated from said engine, having no gas generator, and capable of generating thrust for takeoff, landing, and subsonic flight speeds. The system further comprises gas flow tapping means movable between a position in which they tap off at least a fraction of the exhaust gas produced by said engine and feed it to said propulsion assembly to enable it to generate thrust for takeoff, landing, and subsonic cruising flight, and a position in which the gas produced by the engine is directed solely to the engine nozzle for supersonic cruising flight.

US2001011691 describes an engine arrangement comprising propulsion means for propelling the aircraft, and drive means to drive the propulsion means. The arrangement further includes mounting means to mount at least the propulsion means in a location spaced above the upper surface of the aircraft. In the preferred embodiment, the propulsion means is in the form of tip driven fans, and the drive means comprises gas generators mounted within the body of the aircraft fixedly connected by intake ducts to the underside of the aircraft.

US3442082 describes an engine and propulsion means involving turbine gas generation means and utilization of pressurized gases in propulsion of supplementary propulsive fans.

EP1331378 describes a low-noise separated core engine type turbofan engine is provided in which noise generated by a control propulsion device is reduced by using high pressure air as the working fluid of a turbine for driving a control fan used in the attitude control of the airframe. A control fan of a separated core engine type turbofan engine, which is comprised in a control propulsion device provided for attitude control of the aircraft, is driven by an air turbine which uses as working fluid high pressure air compressed by a compressor of the core engine and supplied through a duct.

GB594207 describes a gas turbine propulsion plant for an aircraft in which the power is used partly in a jet and partly in a power turbine directly coupled to contra-rotating tractor airscrews.

It is an aim of the present invention to provide an alternative gas turbine engine configuration having two or more fans, which mitigates at least some of the above described problems.

According to a first aspect of the present invention there is provided a gas turbine engine propulsion system comprising a first propulsive unit having a core engine and a first turbine arranged to be driven by combustion products from the core engine, the first propulsive unit further comprising a first fan rotor and a first fan shaft drivingly connecting the first turbine and the first fan rotor, wherein the propulsion system comprises a further turbine arranged in flow series with the first turbine and a second propulsive unit spaced from the first propulsive unit, the second propulsive unit having a second fan rotor driven by the rotational output of the further turbine.

The provision of independent first and second propulsive units, where the fan of the second unit is driven by the combustion products of the first unit, allows independent optimisation of the design of those units. Also the provision of independent propulsive units allows mounting configurations which can better accommodate any or any combination of the weight, thrust and/or drag generated by those units with respect to the airframe.

The present invention may allow higher bypass ratios and improved propulsive efficiency to be achieved without excessive weight or drag. Alternatively, the invention may allow conventional bypass ratios to be achieved with reduced weight or drag. A particular benefit of the invention is that it would enable a large aircraft to be accommodated with two engines that, because of practical installation and transportation constraints on fan diameter, would hitherto have needed more than two engines. The more powerful engines of the present invention, having larger core mass-flows, will be more efficient than engines with smaller core components. By minimising the number of core engines the reliability of the aircraft can be increased. The maintenance burden for such an engine may be reduced and its economics may be improved.

The further turbine may be connected to the second fan rotor by a second fan shaft. The first and second fan shafts may be parallel in orientation. The first and second fan shafts may be non-axially aligned. The second fan shaft may be offset or translated with respect to the axis of the first fan shaft, for example in a vertical direction.

The further turbine may be located in the second propulsive unit. This may beneficially allow the further turbine to be connected to the second fan rotor by a simple, conventional shaft arrangement.

The further turbine may be arranged to drive a generator. The second fan rotor and/or multiple fan rotors may be driven by one or more electric motor, which may be powered by the generator, either directly, or for example via power electronics and/or an intermediate electric power store.

One of the first or second propulsive units may be mounted beneath an aircraft wing, whereas the other of the first or second propulsive unit may be mounted above the same wing. The first and second propulsive units may be vertically offset. The first and second propulsive units may be laterally aligned or offset. The first and second propulsive units may be arranged in a fore-and-aft configuration or vice versa.

Each of the first and second propulsive units may comprise a respective housing or casing, such as a nacelle.

Such arrangements of propulsion units may serve to reduce interference drag and improve area ruling of the integrated airframe and nacelles.

The further turbine may be downstream of the first turbine with respect to the flow of combustion products from the core engine. An axis of rotation of the further turbine may be offset from an axis of rotation of the first turbine.

The further turbine may be located remotely of the first propulsive unit. The propulsion system may comprise a duct for conveying the exhaust flow from the first propulsive unit to the further turbine. The duct may comprise an inter-turbine duct and may be arranged to communicate the exhaust or outlet flow from the first turbine to an inlet for the further turbine. The duct may be provided in a pylon structure which supports both the first and second propulsion units. The duct may pass through the wing.

The first and further turbine may be mechanically separated or uncoupled. The rotational speed of the further turbine may vary relative to that of the first turbine during use.

The first and further turbines or associated propulsive fans may be independently driven and/or controlled. The flow through each of the first and second propulsive units may be independently controlled. Each of the first and/or further propulsion units may comprise a variable area propulsion nozzle. The variable area nozzle of the first propulsion unit may be actuable independently of the variable area nozzle of the second propulsion unit. The first propulsion unit may comprise a first (e.g. cold) variable area nozzle, which may control flow through a bypass duct of the first propulsion unit, and a second (e.g. exhaust) variable area nozzle. The second variable area nozzle may be used to control flow from the first turbine to the further turbine.

A common controller may be provided for the first and second propulsion units which may be mounted within either of the first or second units. The controller may comprise a plurality of controller components, which may be distributed between the first and second propulsion units.

A thrust reverser arrangement may be provided in the second propulsion unit. The relative simplicity of the construction of the second propulsion unit compared to that of the first propulsion unit, which comprises the core engine, makes it particularly suitable for mounting a thrust reverser. Also the temperatures within the second propulsion unit in use will be lower than within the first unit and may allow for mounting of further, typically temperature-sensitive, accessories therein.

The first and further turbines may comprise low pressure turbines, which may be arranged in flow sequence and which may be considered to comprise non-core turbines. The core engine may comprise a high pressure compressor, a combustor and a high pressure or core turbine, which may be arranged in flow series. The high pressure compressor may receive a portion of the air from the first fan. The first low pressure turbine may be arranged downstream of the high pressure turbine in the flow of combustion products from the combustor.

Optionally the core engine may comprise multiple core compressors and turbines in flow series (e.g. intermediate and high pressure compressors and turbines) with the first low pressure turbine being downstream of the last core turbine in the flow series.

The invention may advantageously allow the number of low-pressure turbine rotor stages and/or blades and associated vanes to be reduced when compared to conventional engine fan configurations of comparable air volume flow rates. Examples of the invention may advantageously allow the overall parts count in the turbines for a very high bypass ratio engine in comparison with a conventional non-geared engine having a comparable high bypass ratio.

In one embodiment, the first and second propulsion units are mounted to an aircraft wing by a pylon, which may comprise a common pylon structure. A first portion of the pylon may extend beneath the wing and a further portion of the pylon may extend above the wing.

Such a pylon arrangement may reduce bending moments transmitted to the wing, such as via the wing torsion box, by the pylon, and may thereby save weight.

Embodiments of the invention may advantageously allow a conventional under-wing engine configuration to be used for the first propulsion unit, including the aerodynamic efficiency thereof, whilst also accommodating an increased bypass ratio, without requiring substantial modification of existing aircraft wing design for example by extending the undercarriage or raising the wing profile.

The second propulsion unit may contribute a greater or lesser proportion of the total thrust than that of the first propulsion unit.

The fan of the second propulsion unit may comprise a ducted fan or an unducted or open-rotor fan and may comprise two rows of contra-rotating fan blades. The second fan rotor may be driven by the second turbine via a gearing arrangement. The fan duct flow area of the second propulsive unit (e.g. the annular cross sectional area) may be larger than the bypass duct flow area of the first propulsion unit. The internal and/or external profile of the first nacelle and the second nacelle may be different.

The first propulsion unit may additionally comprise any or any combination of an intercooler, a recuperator and/or an inter-turbine combustor.

The second fan rotor may have a larger diameter than that of the first fan rotor. This may allow the second fan rotor to contribute to the overall thrust to a greater extent than the first fan rotor, for example in the event that the first propulsion unit comprises an intercooler arrangement, e.g. in the bypass duct fed by the first fan rotor.

According to a second aspect of the present invention, there is provided a propulsion unit for an aircraft, the propulsion unit comprising a low pressure turbine drivingly connected to a fan rotor by a fan shaft, the turbine and fan being contained within a housing, wherein the propulsion unit further comprises ducting passing to/from the low pressure turbine through the housing so as to allow supply of combustion products to the low pressure turbine from a gas turbine engine located remotely from the propulsion unit.

Any of the preferable features described above in relation to the second propulsion unit of the first aspect of the invention may be applied to the second aspect.

The invention may be considered to encompass parallel flow fans driven by turbines associated with a single combustion engine. In this regard, parallel flow fans may be considered to be indicative of an arrangement in which the majority or substantially all of the flow from the first fan is not received by the second fan. This contrasts to a series flow arrangement, such as a contra-rotating fan arrangement, in which the majority, or substantially all, of the flow from the first, upstream fan passes to the second, downstream fan.

Practicable embodiments of the invention are described in further detail below by way of example with reference to the accompanying drawings, of which:
Figure 1 is a schematic section view through an engine configuration according to one example of the present invention;
Figure 2 is a schematic longitudinal section showing further detail of a first propulsive unit according to one example of the present invention;
Figure 3 shows side and sectional views of ducting which may connect the first and second propulsive units according to an example of the invention;
Figure 4 is a schematic longitudinal section showing further detail of a second propulsive unit with a deployed thrust reverser, according to one example of the present invention;
Figure 5 is a schematic of an alternative example of a second propulsive unit;
Figure 6 is a schematic half longitudinal section through an example of an intercooler arrangement for the first propulsion unit; and,
Figure 7 is a schematic longitudinal section through an example of an intercooled and recuperated arrangement for the first propulsion unit.

The invention is particularly suited to twin-engined subsonic commercial aircraft, typically having a low-wing or mid-wing configuration, and more-particularly to relatively large or long-haul aircraft, although it will be appreciated that other aircraft and engine configurations may be accommodated. The invention may equally be applied to blended wing body aircraft.

The invention derives from the general premise of providing a two-part aero-engine which has two parallel flow fans driven by two low-pressure turbines arranged in flow series, such that a first portion of the total engine thrust comes from the first fan, a second portion from the second fan and a third portion from the core exhaust. The provision of low-pressure turbines in series allows both fans to be driven by a single core engine arrangement.

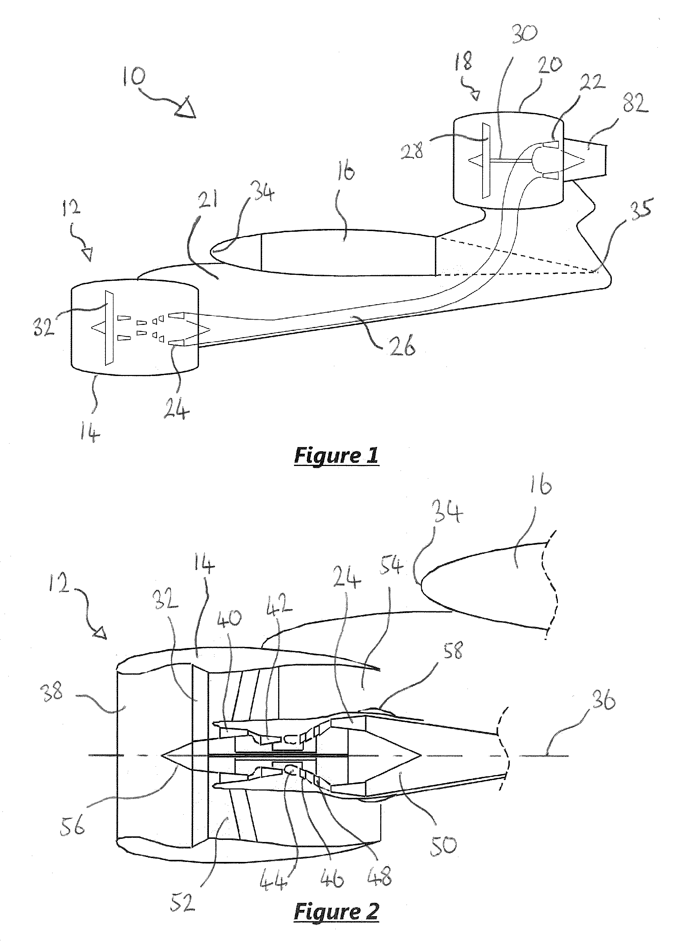

Turning firstly to Figure 1 there is shown a schematic of an embodiment of the invention in which a gas turbine engine propulsion system 10 comprises a first propulsion unit 12, which takes the form of a turbofan aero engine mounted in nacelle 14 beneath a wing 16 of an aircraft. This turbofan engine has a conventional, typically moderately-high, bypass ratio.

The system also comprises a second propulsion unit 18, which is mounted above the height of the same wing 16, in this example within nacelle 20.

A pylon structure 21 supports both the first and second propulsion units, such that the first propulsion unit 12 is at a position below the wing and in front of the second propulsion unit in the direction of travel of the aircraft/wing.

The second propulsion unit 18 differs from the first propulsion unit 12 in that it does not comprise a core engine. Instead the second propulsion unit comprises a turbine 22, which is in communication with the exhaust from the first propulsion unit 12. Accordingly the second propulsion unit is downstream in flow series from a low pressure turbine 24 in the first propulsion unit.

The turbine 22 of the second propulsion unit comprises a low-pressure turbine which is in communication with the exhaust of the first unit 12 via a duct 26 within the pylon structure 21. The duct passes aft of the first propulsion unit 12 beneath at least a portion of the wing 16 and subsequently passes through the nacelle 20 of the second propulsion unit to the turbine 22. Thus the duct 26 allows passage of combustion products from the core engine of the aero-engine 12 to the turbine 22. That turbine 22 is connected to a fan 28 housed within the nacelle 20 by shaft 30 so as to drive the fan 28.

The fan 32 of the first propulsion unit 12 is driven by the turbine 24 of the aero-engine. It is noted that the duct 26 receives the core engine exhaust flow and not the air in a bypass duct of the first propulsion unit and accordingly the fan 28 operates in parallel with the fan 32 since it does work on a different volume of air to that of fan 32.

The use of two fans in this manner reduces the fan pressure ratio for each fan, when compared to a single fan configuration for a gas turbine engine, which allows each fan to be driven by fewer low-pressure turbine stages with a lower overall expansion ratio. This allows a more fuel efficient, lower specific thrust aero engine to be provided without incurring the weight penalties associated with other competing engine architectures.

If the two fans have the same or similar diameters, then typically more than half of the normal net forward thrust should come from the second propulsion unit which includes the turbine exhaust. However there will also be thrust loads generated by the inter-turbine ducting that will be taken into account in the mechanical design of the engine mounting systems.

The arrangement of the present invention can effectively double the bypass ratio of an engine without needing to incorporate a reduction gearbox, or a larger number of low-pressure turbine stages. Thus it improves the propulsive efficiency and/or minimises any increase in the overall weight of the lower specific thrust powerplant. Such benefits can be achieved without significant reliance on unproven technologies since a significant proportion of the architecture of propulsion units 12 and 18 can be derived from conventional gas turbine engines.

Also the system 10 can be installed on a conventional low-wing commercial or business airframe. Also, the fan and nacelle diameter for each of the propulsion units may be reduced when compared to a conventional, single fan engine so as to improve the transportability thereof, particularly for large twin-engine aircraft. Further details of the individual propulsion units and pylon structure are described below. Such details may be considered alone or in combination to provide for further examples or embodiments of the invention.

### First Propulsion Unit

The first propulsion unit, including the first high bypass ratio fan, the gas turbine core and the first fan's direct drive low-pressure turbine 24, is conventionally mounted forwards of and beneath the wing of the aircraft. The centre of gravity and/or the entire nacelle 14 of the first propulsion unit may be located in front of the leading edge 34 of the wing 16.

With reference to Figure 2, the ducted fan gas turbine engine of the first propulsion unit 12 has a principal and rotational axis 36. The engine comprises, in axial flow series, an air intake 38, a propulsive fan 32, an intermediate pressure compressor 40, a high-pressure compressor 42, combustion equipment 44, a high-pressure turbine 46, and intermediate pressure turbine 48, a low-pressure turbine 24 and a core engine exhaust annulus 50. The nacelle 14 generally surrounds the engine and defines the intake 38, a bypass duct 52 and a bypass exhaust nozzle 54.

In use, air entering the intake 38 is compressed by the fan 32 to produce two air flows: a first air flow into the intermediate pressure compressor 40 and a second air flow which passes through a bypass duct 52 to provide propulsive thrust at the nozzle 54. The intermediate pressure compressor 40 compresses the air flow directed into it before delivering that air to the high pressure compressor 42 where further compression takes place.

The compressed air exhausted from the high-pressure compressor 42 is directed into the combustion equipment 44 where it is mixed with fuel and the mixture combusted. The resultant hot combustion products then expand through, and thereby drive, the high, intermediate and low-pressure turbines 46, 48, 24 before being exhausted through the annular exhaust 50, which leads to the duct 26 to the second propulsion unit 18. The high, intermediate and low-pressure turbines 46, 48, 24 respectively drive the high and intermediate pressure compressors 42, 40 and the fan 32 by suitable interconnecting shafts.

Alternative gas turbine engine arrangements for the first propulsion unit 12 may comprise a two, as opposed to three, shaft arrangement, such that they comprise only two compressors and turbines, typically referred to as high and low pressure compressors and turbines. Alternative arrangements may provide for different bypass ratios. In any of the above-described engine configurations, a core engine may be defined as comprising at least the high pressure compressor, the combustor and the high pressure turbine.

The fan 32, comprises a conventional fan assembly having an annular array of radially extending blades mounted on a retaining disc (not shown), which is in turn drivingly connected to the low pressure shaft. A spinner assembly 56 provides an air-washed surface that directs the intake air onto the fan blades. The use of a relatively low-pressure ratio ducted single rotor front fan with a conventional nacelle means that the core engine is protected by the fan from most potential incidents of foreign object damage, including bird strikes.

The bypass ratio of the first fan will typically be in the range of five to ten. The overall bypass ratio for an engine with two fans of the same diameter would typically be in the range of 11 to 21. For a near-term commercial aircraft application, an optimal bypass ratio for the first fan could be six, increasing to eight or more in later years as advances are made that increase core specific power or reduce the weight of low pressure systems and nacelle structures. For engines of the same specific thrust the maximum fan and nacelle diameters could be reduced by at least 20% (for example up to approximately 29%) and the fan rotational speeds increased by at least 30% (for example up to approximately 41%).

Optionally the first low-pressure ratio fan 32 could be a variable pitch fan of generally conventional design as would be known to the skilled person in this field. In Figure 2, there is also shown the optional feature of a variable area nozzle for the fan 32 in order to optimise its performance over varying operating conditions. Because the pressure ratio for the fan 32 is reduced, a variable area fan "cold" nozzle is likely to be required to maintain optimum efficiency and also to control fan surge margin, particularly at take-off.

Many different variable-area cold nozzle arrangements are known and could potentially be employed, but in a preferred embodiment an inflatable member or set of inflatable members 58 is provided about the core engine casing, which protrudes into the bypass duct 52, typically in the vicinity of the exit nozzle 54 of the bypass duct. The degree of inflation (determined for example by the inflation pressure) of the member 58 can thus be controlled to vary the flow area of the cold nozzle. In such an embodiment, the nacelle and core fairings for the engine of the first propulsion unit may be integrated as a pair of semi-annular or C-shaped ducts in section. The inflatable members 58 may be provided as inflatable elastomeric core fairing blisters provided on each side of the core fairings.

At take-off, the inner diameter of the cold nozzle is typically minimised to maximise nozzle area, mass flow and surge margin, whereas at climb conditions the inner diameter of the nozzle is typically maximised. At cruise conditions the inner diameter may be elevated above the minimum condition (for takeoff), but below the maximum, for the top of climb condition (for the top of climb). This allows high or maximum efficiency both at climb and cruise.

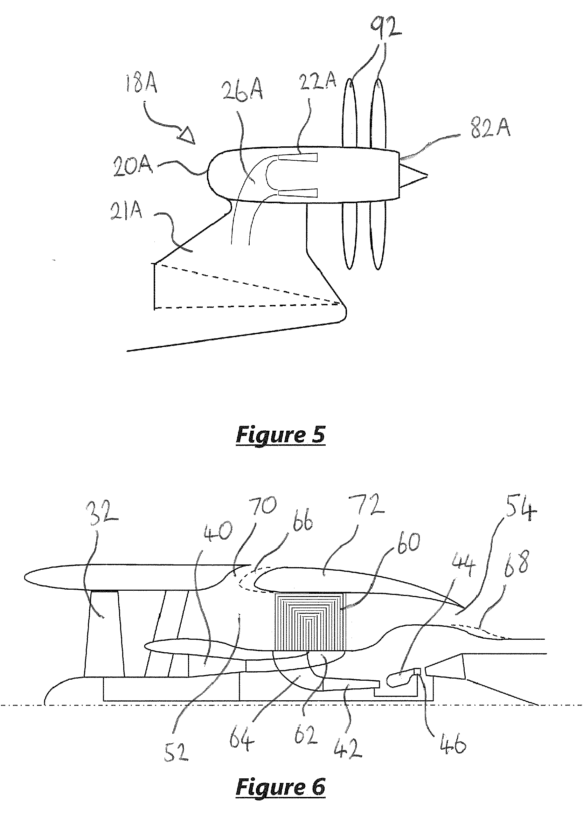

Optionally, the first propulsion unit may incorporate heat exchangers for intercooling or intercooling-and-recuperation in order to improve thermal efficiency. In this regard, the two-part aero-engine concept of the present invention could also be an enabling technology for advanced cycle aero engines. One example of such an arrangement is shown in Figure 6, in which a heat exchanger 60 is arranged to extract heat from the air flow fed to the high pressure compressor 42.

The heat exchanger 60 is arranged in the flow path between the medium 40 (or low) pressure compressor and the high pressure compressor 42. Thus the air leaving the compressor 40 is fed to the heat exchanger inlet by duct 62 and is cooled before exiting the heat exchanger and passing to the high pressure compressor via duct 64. The heat exchanger 60 is cooled by air within the bypass duct 52 so as to extract heat from compressed air flow.

Optionally the air-cooled intercooler 60, for example in a high overall pressure ratio intercooled engine, or in a lower pressure ratio intercooled and recuperated engine, could be configured so as to occupy a majority of, or else substantially all of, the diameter of the aft part of the first bypass duct 52 as shown in Figure 6. In this case the fan 32 would have a relatively low bypass ratio typically in the region of one to three and would typically make use of a variable-area exhaust nozzle, such as 58 shown in Figure 2.

However, by way of a further optional development, the bypass duct 52 could have two variable-area exhaust nozzles 66 and 68, the first 66 of which is positioned upstream of the heat exchanger 60 and the second 68 being downstream thereof. By varying the area of each of these nozzles, the proportion of the bypass duct air passing through the intercooler could be varied to optimise the degree of cooling provided by the intercooler according to the thrust rating of the engine. Also the airflow through the first fan 32 could be optimised in relation to the flight Mach number in order to maximise fan efficiency and fan surge and flutter margins. This arrangement may more easily be facilitated if the first propulsion unit has no conventional thrust reverser, an example of which will be described in further detail below.

The first, upstream, variable area nozzle 70 may comprise a substantially annular opening, which may have an "S-shaped" cross-section, for example similar to that of the Rolls-Royce and Snecma M45H engine fan-stream exhaust nozzle. Area variability for the nozzle 70 can be achieved by means of an aerodynamic afterbody section 66 of the nacelle 72, which is capable of forward and aft translation.

The second, further aft, variable area cold nozzle 54 on the first propulsion unit may achieve its area variation by means of a translating portion 68 of the nozzle, as shown schematically in Figure 6 as an alternative to the inflatable member 58 shown in Figure 2. The variable area cold nozzle 54 may comprise any of the arrangements described above or may be realized by means of some other design of variable-area nozzle. In the case of a translating nozzle portion 68, a fore and aft translation may be achieved by actuation systems known in the art.

The maximum cross-section area and mass-flow through the second or each nozzle can be chosen to be compatible with an optimal intercooler heat exchanger design.

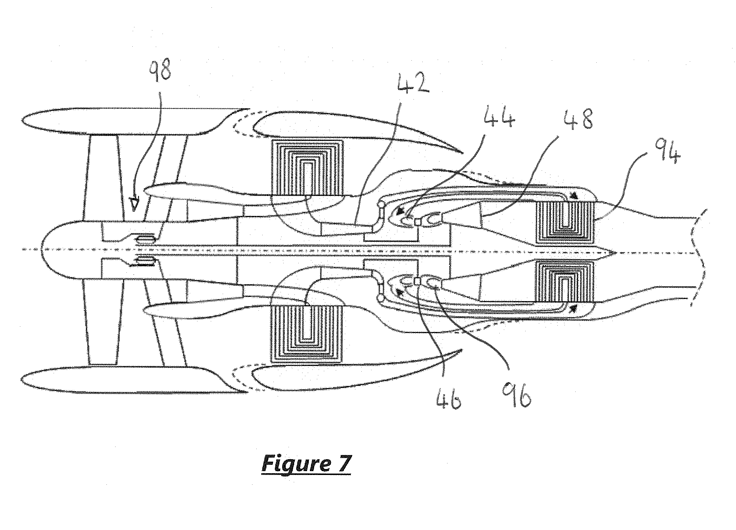

Whilst the provision of two variable area flow nozzles in a bypass duct for an intercooled gas turbine engine is described as an optional feature of the present invention, it is to be noted that such an arrangement, optionally including any of the features described in relation to Figures 6 and/or 7 may provide a further definition of an aspect of the invention either in isolation of, or else in combination with, the two-part aero-engine concept.

For any of the intercooled engine variants, optionally the second fan could have a larger diameter and contribute more to the overall bypass ratio and so generate the larger proportion of the overall thrust. The pressure ratios and speeds of the two fans could then be optimised separately, without need for synchronisation. However, by appropriate sizing of the first nozzle behind the first fan it may still be possible to have common fan diameters and fan designs that have at least some parts commonality. Such an engine could also achieve fan speed synchronisation, and optionally also synchrophasing, over at least the engine's high-power operation, by means of variable area nozzles at the inlet to the low-pressure turbine 22 in the second propulsion unit, or by means of the variable area exhaust nozzles behind the fans, or by means of adjusting the fan blade pitch of either one or two variable pitch fans, or by some combination of the above.

In an embodiment in which a recuperator heat exchanger is used, it would typically be arranged to preheat the core engine air flow before it enters the combustor 44. Such an arrangement is shown in Figure 7. The recuperator 94 could be placed just aft of the first low-pressure turbine 48 and might extend for some distance rearwards under the wing. A recuperator in this location may be more beneficial to the performance cycle than one placed further aft, downstream of the last low-pressure turbine (22 in Figure 1), because its hot-side inlet temperature will be higher, enabling it to transfer more heat to the high pressure compressor delivery air before it enters the combustor 44 and thus to improve fuel economy. Also the hot-side pressure in the recuperator in this location will be higher than it would have been downstream of the last low pressure turbine, leading to higher heat transfer coefficients and a more compact and lighter recuperator design. Furthermore it places the recuperator 94 closer to the high-pressure compressor 42 and to the combustor 44, minimising the length of the high-pressure ducting between those components.

Optionally the first part of the engine may also incorporate a second combustor 96 behind the high-pressure turbine 46 or between stages of a multi-stage high-pressure turbine. Preferably the second combustor is integrated into an intercooled or an intercooled-and-recuperated engine (as shown in Figure 7). The second combustor enables a higher fuel/air ratio to be achieved in the core, reducing its total mass flow and increasing its specific power, for example without requiring extremely high temperatures in the first combustor 44 that could create severe combustor and turbine cooling problems and generate high levels of oxides of nitrogen (NOx) in the exhaust emissions. Also the thermal efficiency of the cycle is improved by raising the mean temperature of heat addition through having a second stage of combustion. Since the core mass flow is reduced, the sizes and weights of any core components, including intercoolers or recuperators, are also beneficially reduced.

An advantage of the current invention is that it can enable a smaller shaft diameter for the first fan. The technologies of intercooling, of intercooling and recuperation and of inter-turbine reheat combustion all tend to reduce the core non-dimensional mass flow and hence the size of the core components, but if they were applied to a conventional high bypass ratio turbofan engine with a direct-drive front fan, the design of the core turbomachinery would be compromised by the need to accommodate the relatively large diameter fan shaft running through the centre of the engine. The invention may therefore enable implementation of more efficient gas turbine cores and performance cycles, for example without the cost, weight and complexity of a geared fan arrangement.

However the incorporation of fan shaft reduction gearing in either or both of the propulsion units may further compound the benefits of the two-part engine by further reducing the number of low pressure turbine stages and shaft diameters. A two-part engine with two geared fans could have approximately a 29% reduction in the combined output torques of the two gearboxes and lower gear ratios, resulting in proportionate weight savings relative to a larger gearbox for an engine with just one large fan of the same tip speed and total air flow. A geared fan arrangement is shown by way of example at 98 in Figure 7, although a geared fan arrangement could be employed in any of the other embodiments described herein by providing a gearing arrangement, such as a gearbox, in the force path between the low pressure turbine and fan of either the first and/or second propulsion units. Geared fan arrangements may be particularly suited to engines with higher bypass ratio fans, including engines with any or any combination of intercooling, recuperation and inter-turbine combustion.

### Pylon and Inter-Turbine Duct

The pylon 21, shown in Figure 1, provides a generally conventional mounting for the first propulsion unit 12. However, unlike a conventional pylon, the pylon structure 21 also extends further rearwards to support the second propulsion unit 18 and to provide a structure in which the duct 26 can be housed. Aft of the wing torsion box the pylon increases in height and extends above the wing 16 to provide a support structure for the second propulsion unit 18, including the second nacelle 20.

The wing 16 comprises a torsion box arrangement. The mounting of the first and second propulsion units in fore and aft locations relative to the torsion box of the wing is beneficial in that at least a part of the torsional loading generated by the offset weight of one of the propulsion units under positive g loading will be counteracted, at least in part, by the moment from the other propulsion unit. Furthermore the thrust moments generated by the propulsion units can be substantially balanced about the wing torsion box. Thus weight savings may be realized in the design of the wing torsion box.

The inter-turbine duct 26 extends aft of the first propulsion unit 12 from the first low-pressure turbine 24 and is preferably enclosed within the part of the structural pylon 21 that supports the first propulsion unit. The duct 26 extends rearward and upward from the first propulsion unit 12, typically towards the trailing edge 35 of the wing 16 as shown in Figure 1. In this region, the duct passes under the wing torsion box.

Towards the trailing edge of the wing 16, the pylon protrudes above the upper surface of the wing. In this region, the duct 26 passes through the wing in an upwards direction towards the second propulsion unit.

The inter-turbine duct 26 is thermally insulated and the pylon structure is preferably ventilated to inhibit any unwanted transfer of heat to the airframe. In this regard, the majority of the duct can be of circular cross-section and of relatively simple and lightweight tubular construction because the inter-turbine gas stream has already been expanded through the upstream turbines within propulsion unit 12. Accordingly, the temperature and pressure of the combustion products passing through the duct 26 will not be so high that its ducting will require any very special materials or cooling technologies. However it is envisaged that the duct will be provided with means for accommodating differential thermal expansion, for example by way of bellows, multiple gimbals or one or more sliding joints, or other constructions known in the art.

The pylon will typically comprise support features (not shown) to resist the thrust loads on the duct caused by the engine exhaust. Assuming that the inter-turbine ducting is designed with sliding or flexible joints, the thrust loads on the ducting may be resisted by duct suspension features within the pylon that encases the majority of the ducting. The thrust loads generated by the inter-turbine ducting will also be taken into account in the mechanical design of the engine mounting systems.

At the exit 50 from the first low-pressure turbine 24 a diffuser arrangement is provided, as shown in Figure 2, in contrast to the nozzle of a conventional gas turbine engine. The diffuser is annular in form and may be considered to comprise either an extension to the core afterbody or exit 50 or else an inlet diffuser formation in the upstream end of the duct 26. The diffuser provides an expanding flow cross-section area in the direction of flow. Such a diffuser slows the core engine exhaust flow in order to minimise the frictional and turning pressure losses which occur downstream within the inter-turbine duct.

The inter-turbine duct may be considered to comprise a jet pipe.

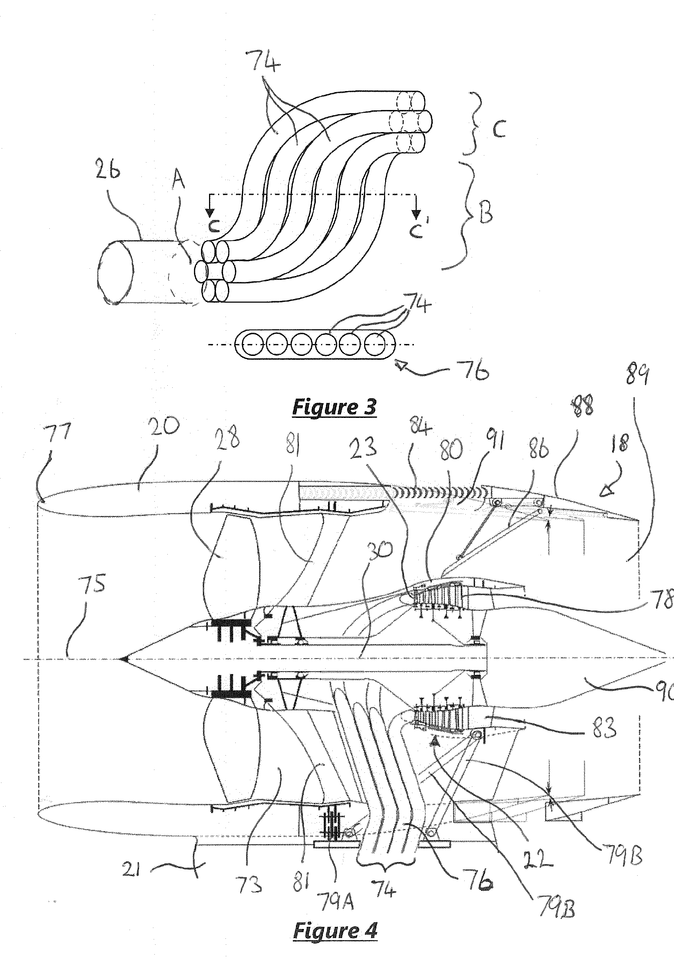

In order to feed the low-pressure turbine 22 in the second propulsion unit 18, the inter-turbine gas stream must first cross the nacelle 20 and the bypass duct 73 of the second fan 28, for example as shown in Figure 4, by passing inside a splitter fairing at the bottom of the fan duct.

Turning now to Figure 3, there is shown one example of a possible duct formation for passage of the inter-turbine gas stream into the second propulsion unit 18 at the downstream end of the duct 26. In this example, the downstream portion of the duct comprises an array of conduits, such as pipes or tubes, 74 that are arranged in a substantially co-extending or parallel-flow arrangement such that the combined flow areas of the individual pipes 74 provide the total flow area of the ducting. Thus the diameter of each individual pipe 74 is a fraction of that of the overall duct 26.

Upstream of the second propulsion unit, the pipes 74 may be arranged, for example in a circumferential array, such that they approximate the profile of the duct, 26 which may be substantially tubular or else any other suitable, generally rotund, profile to minimise flow losses as indicated at location A in Figure 3. The relative alignment of the individual pipes 74 is altered in the region B of Figure 3 as they pass into the second propulsive unit, specifically through the fan duct 73. In this region the arrangement of the pipes is modified to provide a linear array as shown in the section view of the lower half of Figure 3, which is taken through the plane C-C'. In the region B of Figure 3, the pipes are arranged in an elongate side-by-side relationship so as to present a minimal obstruction to the flow direction in the fan duct 73, without restricting the desired total flow area of the inter-turbine ducting. Thus the width and drag of the splitter fairing 76 can be minimised.

The smaller-diameter pipes 74 are subsequently re-aligned, in the region C in Figure 3, to approximate an annular duct profile upstream of the second low-pressure turbine 22. A transition duct section may be provided in the region A or C to transition smoothly from the individual pipe profiles to the desired duct cross section.

A further advantage of this arrangement is that the smaller diameter pipes can be arranged so as to pass either side of the second fan shaft 30. The optimum number of pipes and the configuration of the ducting may be varied to suit any given installation.

Regardless of the inter-turbine duct profile as it passes through the second propulsion unit 18, preferably the last, downstream portion of the ducting 26 leading to the second low-pressure turbine 22 has a reduced or reducing flow area to accelerate the flow towards a low-pressure turbine nozzle formation for the second low pressure turbine 22. This may serve to avoid flow separation and also allows the main part of the duct 26 to have lower flow velocity and lower pressure losses.

The downstream section or end of the inter-turbine ducting 26 may also be shaped to impart a swirling flow at entry to the second low-pressure turbine 22. In this regard the duct and/or pipes 74 may be twisted, for example in a helical fashion or else may comprise flow deflecting formations such as vanes upstream of the turbine.

### Second/Downstream Propulsion Unit

The second propulsion unit 18 is typically located well above and mostly aft of the wing 16, but otherwise in-line with the first nacelle and not too close to the fuselage. The unit 18 and its nacelle 20 and the wing 16 are aerodynamically profiled so as to minimise interference drag. The nacelle 20 houses the second fan 28 driven by the second low-pressure turbine 22, which both rotate about a common axis 75.

Figure 4 shows a cross-section through a second propulsion unit 18 and illustrates a mounting arrangement for supporting the unit 18 on the aft region of the extended pylon 21. A front mount with linkages 79A is attached to the rear of the fancase, which may be stiffened by the fan outlet guide vanes 81 that form the front frame of the engine. Such a mounting can resist vertical and side loads and also torsional loads through spaced-apart linkages (not shown in detail). An aft mount comprises an arm which may be a further mechanical extension of the pylon, typically in the form of a tripod of arms 79B converging at the turbine outlet guide vane 83 assembly, typically at its lowest point, to resist pitch, yaw and thrust loads.

The second propulsion unit 18 is not a complete engine in its own right to the extent that it has no combustor and no fuel supply. It is provided with pressurised exhaust gasses from the core engine of the first propulsion unit 12 via the inter-turbine duct 26. The second propulsion unit is also devoid of high-pressure turbo-machinery and so its architecture and cooling requirements are far simpler than those of the first propulsion unit.

The second propulsion unit has a ducted, low pressure ratio, high bypass ratio fan 28, directly driven by the second low-pressure turbine 22 via shaft 30. The second fan 28 may be substantially as described above in relation to the first fan rotor 32. It is possible that the fan blades and other components of the fan assembly 28 could be identical to those of the fan 32, although it may be further beneficial to modify the fan assembly 28 such that it is optimised to suit the different operating conditions from the fan 32. Commonality in the designs of the first and second fans may allow for economy in manufacture. Thus the fan rotors, stators, containment casings, front frame and bearing supports, bearings and sealing may be identical and possibly the outlet guide vane assemblies for the two fans could be common parts, particularly if they extend the full span of the rotor and the bypass duct splitter for the core engine of the first unit is positioned behind the vanes.

Furthermore, the inlet to the second propulsion unit 18 does not experience the same range of air incidence angles as the first nacelle 14 and so it can have a thinner inlet lip 77 and a smaller maximum diameter for the same fan diameter. However the combined fan and core exhaust flows from the second part of the engine are greater than the second fan inlet flow and so the outer diameter of the exhaust nozzle is relatively large, enabling the external aerodynamic profile to give a very short nacelle with less susceptibility to shock losses at high cruise Mach numbers.

The second low pressure turbine 22 comprises a plurality of rows or stages of nozzle guide vanes and turbine blades 78 arranged in flow series within a turbine casing 80. Each row of blades comprises a circumferential array of blades mounted on a disc, such that the blades extend radially outwardly therefrom. The discs are attached to form a common rotor drum arrangement which transfers torque from the blades to the shaft 30. The space between the turbine rotor drum and the casing 80 defines an annular flow passage.

Each row of turbine blades is spaced from the next row by a row of stator vanes, which are arranged in a circumferential array. The stator vanes are mounted in a conventional manner in the casing 80 and extend radially inwardly into the flow passage.

A plurality of turbine stages is provided, typically between three and five stages, and in this particular embodiment, the low pressure turbine comprises four stages.

Any of the structural features described above in relation to turbine 22 may also be applicable to the first low pressure turbine 24 in the first propulsion unit 12. However it is possible that, in an optimised embodiment of the invention, the second low-pressure turbine 22 has a greater mean radius than the first turbine 24 and may have one fewer turbine stages, although it may deliver the same or a similar power output to the first low pressure turbine. Such differences may be preferable in the event that a common fan design is implemented for the first 32 and second 28 fans as discussed above. These differences result from the different inlet conditions and non-dimensional mass flows of the two low pressure turbines.

During operation, the exhaust flow from the first propulsion unit drives the turbine 22, which in turn drives rotation of the fan 28 via shaft 30 to thereby pump air flow through the fan duct 73. Since the second propulsion unit 18 has no combustor, all, or substantially all, of the air flow through the fan contributes directly to thrust and the fan duct 73 geometry can be optimised accordingly.

The exhaust from the low-pressure turbine 22 also produces a propulsive jet, which passes through an exhaust nozzle before exiting the unit 18. The two exhaust streams may be ejected through separate nozzles, for example as indicated by the configuration of Figure 1, in which the turbine exhaust nozzle 82 extends downstream beyond the fan duct 73 nozzle, thereby maintaining the separation of the two flows.

Optionally, for example in order to optimise transfer efficiency and the efficiency of the second fan 28, the latter unit may be configured with a mixed flow exhaust system. The turbomachinery in the second unit can be of relatively short overall length and so a relatively short fan cowl can still be combined with a common exhaust nozzle configuration with adequate mixing length for the respective jets. Thus it would be possible to gain the benefits of such an arrangement without the usual weight and drag penalties associated with a longer nacelle for a conventional propulsion system incorporating high-pressure turbo-machinery. Preferably the exhausting of the combined flow through a common nozzle as shown in Figure 4 would provide the major part of the overall forward thrust of the two-part engine configuration.

Optionally, in the second propulsion unit, a reverse-flow arrangement for the low-pressure turbine could be used to enhance the mixing length and consequent thrust gain. A reverse flow low pressure turbine could be used in conjunction with a flow-reversing chuted mixer and mixed jet exhaust configuration in order to maximise the mixing length within a short nacelle installation, for example in a manner similar to the Garratt ATF3-6 engine turbine configuration. In such an embodiment, the turbine exhaust would be turned through 180º to be mixed back into the bypass duct as far forwards as possible downstream of the fan 28. This may enable a further reduction in the length of the fan cowl, further reducing drag.

In addition to enclosing the second fan 28 and the second low-pressure turbine 22, the second nacelle 20 may beneficially also incorporate a thrust reverser. Such an arrangement is beneficial since there is no requirement to have major fan case mounted accessories on the second propulsion unit 18 because the main engine accessories could be mounted in the first propulsion unit. Also a common exhaust nozzle has a larger than normal exit area in relation to the second fan's inlet area so the diameter of a thrust reverser cascade will naturally tend to be comfortably larger than the diameter of the fan case, increasing the practicality of the compact thrust reverser arrangement shown in Figure 4.

Preferably the thrust reverser for the first part of the engine could be omitted, simplifying the nacelle design and saving weight. Instead of having two thrust reversers the residual forward thrust from the first fan 32 can be reduced in reverse thrust mode by substantially closing the variable inlet guide vanes 23 to the second low pressure turbine.

For the second propulsion unit 18 a thrust reverser configuration of the telescopic cascade type is shown in Figure 4, which is shown with the thrust reverser in a deployed condition. The thrust reverser comprises a cascade of turning vanes 84 mounted in the body of the nacelle 20. In forward thrust mode the cascades are stowed outboard of the fan casing, within the nacelle and are isolated from the flow in the fan duct 73 by blocker doors 86 when they are in their retracted position. The aft section of the nacelle incorporating the common nozzle 88 is telescopically mounted such that it can be axially translated between forward and reverse flow positions so as to translate the nozzle exit 89 accordingly.

When actuated into the reverse thrust condition as shown in Figure 4, the aft section of the nacelle, comprising the common nozzle assembly 88, and thrust reverser cascade segments 84, move rearwards together to open-up reverse thrust fan-stream exhaust openings or nozzles 91. The blocker door panels 86 are deployed to progressively close-off the fan duct 73 upstream of the turbine exhaust mixer. Accordingly the turbine exhaust flow becomes over-expanded within the aftwards-displaced common nozzle assembly, thereby reducing its velocity and the residual forward thrust from the core flow. Typically a plurality of individual blocker doors slide on rails engaging their aft corners and are deployed with the aid of telescopic compression struts as indicated in Figure 4. Ten or more, for example a dozen, individual blocker doors may be provided about the total circumference of the fan duct.

When the blocker doors 86 are deployed, the fan duct flow is diverted through the cascades of turning vanes 84 such that it leaves the nacelle via the nozzles 91 flowing in a substantially forward direction, thereby providing reverse thrust.

A more conventional design of cascade thrust reverser may also be used, but this is likely to result in a longer nacelle and increased nacelle drag for the second propulsion unit.

Depending on the aircraft's reverse thrust requirements it may only be necessary for one of the propulsion units on each side of the aircraft to provide reverse thrust, and in this case it is a preferred option to fit a thrust reverser only to the second or aft propulsion unit. This would simplify the design of the first or forward propulsion unit and save cost and weight relative to the larger thrust reverser that would be required on a conventional engine of the same overall thrust and specific thrust. It may also enable the first or forward propulsion unit to be configured with a very short fan cowl to minimise drag. However in other embodiments, either or both propulsion units may have a thrust reverser as necessary.

In place of the translating cowl arrangements discussed above, a thrust reverser configuration could comprise a pivoting blocker door arrangement.

In reverse thrust operation the cold stream alone may be reversed while the hot stream is over-expanded in the main exhaust nozzle so as to eliminate most of the hot stream residual thrust. Alternatively the thrust reverser could be configured to reverse the whole of the mixed exhaust flow, which may be enabled in the second propulsion unit due to the short length of the turbomachinery upstream of the mixer arrangement. This arrangement could increase the amount of reverse thrust available from the second propulsion unit, if required.

In order to fully maximise reverse thrust for a thrust reverser arrangement which receives fan duct flow only from the second propulsion unit, it is desirable to reduce the expansion ratio of the first low-pressure turbine, preventing the first fan from generating any significant forward thrust as the engine power is increased in the reverse thrust mode. This can be achieved by providing variable inlet guide vanes 23 at entry to the second low-pressure turbine 22 to vary the inlet area thereof. This would typically require the variable inlet guide vanes 23 to have a greater range of (angular) movement than would be required merely for fan speed synchronisation.

Whilst the above-described use of variable low pressure turbine inlet guide vanes for limiting fan-induced thrust during reverse thrust operation is envisaged as being advantageous in relation to the two-part aero-engine concept of the first aspect, it is noted that such a configuration may provide a further aspect of the invention either in isolation of, or else in combination with, the two-part aero-engine concept of the first aspect. Alternatively such a variable inlet guide vane configuration, could be used in conjunction with other embodiments in which a turbine, driven by core exhaust gases, is used to drive second and/or further propulsors, for example as part of a distributed propulsion system. Such an arrangement may encompass a hybrid embodiment, wherein the remote fans are driven by one or more electric motors.

The second propulsion unit may receive only the core engine exhaust flow from the first unit. However the second propulsion unit may also be supplied with compressed air from the first unit, for example to provide turbine annulus and bearing chamber sealing air and also possibly warm air for anti-icing. The air could be bled from a compressor stage of the first unit and ducted to the second unit, through the pylon 21, for example in parallel with the exhaust from the first low-pressure turbine. Optionally, compressed air ducted from the first to the second unit may also be used to power accessories such as variable vane actuators, thrust reverser actuators or oil pumps. Additionally or alternatively, accessories in the second unit 18 could be driven electrically using power generated from a generator or generators on the second fan shaft, or remotely from the first propulsion unit, or from elsewhere on the aircraft.

The second unit 18 may have a self-contained oil system that is independent of the oil system for the first unit 12. This would make it easier to repair or completely change the first unit while leaving the second unit and its nacelle on the aircraft.

Advantageously, the second nacelle does not need to be of the C-duct type, common on large aero-engines, as it does not enclose the usual engine core components and because frequent and rapid maintenance access is not required for the second low-pressure turbine. Thus, in one embodiment the common nozzle and cascade thrust reverser are a full 360° degree assembly cantilevered from the fan casing and fan OGV assembly. That arrangement may improve structural efficiency and economy.

In a preferred embodiment, the second propulsion unit 18 also comprises a variable area nozzle to allow control of the flow through the fan duct. An inflatable configuration may be used as described in relation to the first unit. However, in the event that a mixed exhaust arrangement is used in the second nacelle of the type shown in Figure 4, an inflatable elastomeric variable area plug nozzle may not be suitable. Accordingly a translating plug nozzle arrangement may provide a suitable alternative. An increase in the mixed nozzle exit area 91 to improve fan efficiency and operability at take-off can be realized by actuating the common nozzle assembly 88 to move fore and aft. Such actuation may mimic the start of the deployment of the thrust reverser as shown in Figure 4 but with the blocker doors not yet being deployed (i.e. remaining closed against the fan duct outer wall to prevent flow to the reverser vane cascades). In this regard, the blocker doors 86 are typically only actuated to deploy inboard when the common nozzle assembly moves further aft to start to expose the thrust reverser cascades 84.

During climb and cruise the aft section of the nacelle, comprising the common nozzle arrangement 88, is stowed in its most forward position to give smooth internal and external nacelle profiles and the minimum nozzle exit area 91. The annular nozzle exit area is thus varied by moving the nacelle section 88 with respect to the fixed profile of the turbine exhaust plug that forms the upstream portion of the tail-cone 90.

The use of variable area nozzles is of benefit to low specific thrust, high bypass ratio engines, since they enable fan efficiencies and surge margins to be maintained over a range of operating conditions. The increase in mixed nozzle throat area for the proposed initial aft displacement of the common nozzle is of the order of 5-10%, and typically around 7%. A mixed nozzle configuration also provides a further benefit at top of climb conditions, relative to cruise conditions. Whilst the above-described variable area translating plug nozzle is envisaged as being advantageous in relation to the second propulsion unit, it is noted that such a configuration may provide a further aspect of the invention either in isolation of, or else in combination with, the two-part aero-engine concept of the first aspect. According to such an aspect, there is provided a gas turbine engine comprising a propulsive fan and a nacelle shaped to define an outer wall of a duct for flow generated by the fan, wherein a portion of the duct wall is displaceable in forward and aft directions between first and second positions in order to control the flow area of an exhaust nozzle for the duct, and wherein the outer wall is further displaceable to a third position so as to expose an array of vanes to the flow in the duct for use in a thrust reversing mode of operation. The third position may be further aft of the first and second positions. The wall portion and vanes may comprise components of a telescopic thrust reverser assembly for the engine. The vanes may be mounted within the nacelle and may be moveable with the wall portion between stowed and actuated conditions. The translating vane cascade thrust reverser may result in a shorter overall nacelle than conventional cascade reverser arrangements.

The second unit and its nacelle will need only a few accessory systems, but preferably these will include a self-contained oil system with electrically driven oil pumps and an air/oil separator, and actuation systems for the variable turbine nozzle guide-vanes, the variable area exhaust nozzle and the thrust reverser. A small surface cooler should suffice for oil cooling. If pressurised air is not ducted from a core compressor of the first unit to the second unit, or else if further pressurised air is required for bearing chamber and turbine annulus sealing, it can be generated locally within the second unit for example by a small compressor.

In a further embodiment of the invention, as shown in Figure 5, the second propulsion unit 18A can be configured as an un-shrouded open-rotor design, preferably as a counter-rotating twin open-rotor design, in either a tractor, or pusher arrangement in relation to the support pylon, or alternatively as a single rotation design. Such a propulsor could be driven from the second low-pressure turbine 22 through a speed-reducing gearbox, or alternatively, if the propulsor has a counter-rotating design, the rotors might be driven directly by means of a stator-less, counter-rotating low-pressure turbine configuration.

In Figure 5 the low pressure turbine 22 drives counter-rotating, open-rotor fans in flow series. A geared drive to the fans 92 via a planetary gearbox is likely to be the preferred configuration.

In Figure 5, it can be seen that the nacelle 20 of Figure 4 is absent and instead a turbine casing 20A is provided such that a fan duct is not accommodated within housing 20A, which accommodates only the core engine propulsive flow. Accordingly the open rotors comprise an array of rotor blades 92 which protrude radially outwardly from the turbine casing 20A, within the free stream of ambient air. The turbine exhaust nozzle 82A in this configuration is modified to accommodate the turbine flow only.

The inter-turbine duct 26A configuration may be simplified for this embodiment since it need not pass through a fan duct although its profile may still be minimised to avoid obstructing flow to the open rotor blades.

Since the second propulsor only generates a proportion of the overall engine thrust, but has the full turbine mass flow, the number of turbine stages in a non-geared arrangement need not be excessive. Accordingly the turbine mass flow may, or may not, need to be augmented by bypass air taken, for example from the compression system of the first unit via a bypass duct to the second unit.

Such an open-rotor propulsion unit would be capable of generating significant reverse thrust without the complexity, weight and drag of a more conventional thrust reverser.

Whilst the above-described turbo-prop configuration is envisaged as being advantageous in relation to the second propulsion unit, it is noted that such a configuration may provide a further aspect of the invention either in isolation of, or else in combination with, the two-part aero-engine concept of the first aspect. According to such an aspect, there is provided a gas turbine engine comprising: a first propulsive fan housed within a nacelle shaped to define a duct for flow generated by the fan; a core engine comprising a combustor; a first turbine arranged to be driven by combustion products from the core engine and drivingly connected to the fan for rotation thereof; a second propulsive fan comprising an array of fan blades disposed outside of the nacelle; and, a second turbine arranged to be driven by combustion products from the upstream components and drivingly connected to the second propulsive fan. The second propulsive fan may comprise an open rotor fan assembly, such as for example a contra-rotating fan assembly. The second fan may comprise first and second rows of rotor blades arranged in flow series. The first and second turbines may be arranged in flow series and may be driven by flow from a single core engine. Each turbine may rotate independently of the other turbine and may comprise a plurality of turbine stages. A gearing arrangement may be provided in the force path between the second turbine and the second fan for transmission of torque thereto.

The turbofan arrangement may comprise a relatively low-bypass ratio turbofan. Any of the above-described features may be applied to this aspect. The first and second fans may be provided as part of a common assembly or else may be provided as respective parts of first and second propulsion units in accordance with the first aspect.

### Control of the First and Second Propulsive Units

The first propulsive unit comprises a conventional engine control unit (ECU), typically as part of a Full Authority Digital Engine Control (FADEC) system, such that the control unit receives data from sensors mounted on the propulsion unit and controls engine operation accordingly. Aside from the immediate, safety-critical, control of the engine, the ECU - or another processing unit - provides an Equipment Health Monitoring function, whereby operational data is amassed and compared to one or more operational models in order to assess engine health and potential future operational performance or problems.

The second propulsive unit is fitted with a plurality of sensors mounted at suitable locations thereon for generating readings of any or any combination of fluid pressures, flow speeds, component or fluid temperatures, torque, stress or strain, operating time, cycle time or frequency, vibration, operational speeds (such as rotor speed), or the like. The sensors on the second unit may be in telecommunication with the FADEC/ECU of the first unit either by a wired connection (typically via pylon 21) or else by a local wireless network.

The ECU of the first unit may thus comprise a central controller for both the first and second units. Additionally or alternatively, the second unit may have a dedicated processing means for control and/or health monitoring which may be located within or adjacent the second propulsion unit. Such a control unit for the second unit may provide for semi-independent control of the second unit. Such a control unit would be in telecommunication with the engine control system of the first unit, particularly for the transfer of data pertaining to turbine/fan operating conditions, amongst other possible parameters.

A distributed control system may be provided to accommodate the first and second units and/or sub-assemblies thereof. Accordingly one or more controllers for the second unit may be in telecommunication with one or more other portions of such a distributed control system for the first unit, rather than directly with the main ECU.

Regardless of the particular control hardware configuration, one or more control schemes or regimes can be established for operation of both the first 12 and second 18 units to achieve combined aims. This allows further degrees of freedom of control over and above that of a conventional engine, such that the combined operation of the first and second units can be optimised to a greater degree than that of a single unit. Different control regimes may be established to account for different operating modes or scenarios, which may typically account for different flight phases.

Following is a discussion of various optional features of the first and/or second units that may allow implementation of such control schemes.

In one example, the power split between the first 24 and second 22 low-pressure turbines may be regulated by means of variable incidence vanes 23 in order to control the inlet capacity of the second turbine. Such variable inlet nozzle guide vanes could be operated so as to optimise the combined propulsive efficiency of the two fans 28 and 32 at different thrust ratings. If the two fans are of the same or similar diameter the vanes could optionally be used to tailor or moderate fan speeds over relatively higher power ranges in order to avoid generating any unwanted interference tones or low-frequency beats from near-synchronous rotational speeds. Typically both objectives will be achieved by increasing the inlet capacity or flow of the second low-pressure turbine 22 at high non-dimensional conditions and high overall pressure ratios, and/or by reducing the capacity at low non-dimensional conditions and lower overall pressure ratios.

One embodiment of a possible low-pressure turbine variable inlet guide vane is described in GB 2400411. Preferably the second low-pressure turbine 22 has a first row of variable-pitch inlet guide-vanes so that the nozzle guide vane inlet area can be adjusted to vary the work-split between the two low-pressure turbines and to control their relative speeds. At high power conditions the nozzle guide vane inlet area is adjusted to substantially synchronise or match fan speeds. In a reverse thrust operation the nozzle area may be closed down to greatly reduce the expansion ratio through the first low-pressure turbine. This will significantly reduce the forward thrust produced by the first fan. Accordingly a thrust reverser might only be provided for the second propulsion unit as shown in Figure 4.

Additionally or alternatively to variable turbine vanes, the synchronous control or orchestration of the two fan speeds may be achieved by means of one or both of the fans having variable pitch rotor blades, and/or by differential actuation of variable area exhaust nozzle configurations described above. The cold nozzle areas for both the first and second parts of the engine may either be varied proportionately off-design or varied disproportionately to help control, or synchronise, the speeds of the two fans.

Synchronisation and optionally also synchrophasing of all the engine fans on the aircraft would also be possible by any of these means individually or in combination together with coordinated control of the engine combustor fuel flows for the whole aircraft.

Optionally, either the first, or preferably the second, or possibly both, low-pressure turbines could power an electrical generator and possibly also hydraulic pumps to provide power from a windmilling fan in the event of a multiple engine shut-down. Such a system could replace existing ram air turbine devices. A unit driven by the second low-pressure turbine is more likely to continue to function than a unit driven by the first fan, or by the fan on a more conventional engine arrangement, in the event that the first part of the engine is badly damaged.

### System Benefits

The more optimal two-part engine can take an existing under-wing engine design and reduce its fan diameter and reduce the fan pressure ratio and tip speed, while increasing the fan rotational speed. This enables a much lighter design for the whole fan including its containment casing. The smaller diameter fan would also have a smaller hub radius and so provide a more direct, shorter and more efficient flow-path through to the core compression system. Also the fan shaft can be made lighter due to the reduced torque requirements. Since the overall engine is more efficient, the core mass flow and core size are scaled down, but typically the bypass ratio of the first fan would be reduced relative to the conventional engine.

The core turbomachinery rotational speeds can be increased to reduce the blading hub/tip ratios and to further improve efficiency without the constraint of a large diameter, high-torque, fan-shaft. The number of blade rows and the maximum diameter of the low-pressure turbine can also be reduced. Since the overall length of the turbomachinery and the diameter of the fan are reduced, the nacelle length is also reduced.

Because the thrust from the first part of the engine can be reduced, for example roughly halved, the engine mounting loads and core bending moments are also reduced, reducing core distortions and making it easier to maintain tight rotor tip clearances and to retain high core component efficiencies in service.

To further illustrate the potential benefits of the invention, Table 1 compares a conventional turbofan engine with a higher bypass ratio "large single fan" engine of lower specific thrust, and with a two-part engine of the same lower specific thrust. For example the hypothetical "larger single fan" engine could increase the fan diameter to increase the total inlet mass flow by 50% to improve propulsive efficiency.

**Table 1 - Comparison of a typical two-part engine with more conventional turbofan engine architecture**

| Engine Configuration | Conventional Engine | Larger Single Fan | Two-part Engine |
|---|---|---|---|
| Fan diameter | 100% | 123% | 2 @ 87% |
| Total fan flows | 100% | 150% | 150% |
| Specific thrust | 100% | 66% | 66% |
| Fan specific work | 100% | 62% | 62% |
| Specific fuel consumption | 100% | 93% | 93% |
| Core mass flow | 100% | 94% | 92% |
| Fan tip speed | 100% | 79% | 79% |
| Fan rotational speed | 100% | 64% | 91% |
| Low pressure turbine mean radius | 100% | 128% | 96% |
| Low pressure turbine mean blade speed | 100% | 82% | 87% |
| Low pressure turbine specific work | 100% | 101% | 102% |
| Low pressure turbine work per stage | 100% | 67% | 76% |
| Low pressure turbine blade count | 100% | 192% | 128% |
| Number of low pressure turbine stages | 6 | 9 | 4+4=8 |
| Bypass ratio | 9.0 | 15.0 | 7.1 + 8.1 = 15.2 |

Assuming the same inlet velocity and hub/tip ratio, the fan diameter for the larger single fan configuration is scaled as the square root of the total mass flow (i.e. the core flow plus the core flow multiplied by the bypass ratio). To drive the larger and slower rotating fan, the low-pressure turbine maximum diameter is increased in proportion to the increase in fan diameter, with an even bigger increase in the mean diameter of the low-pressure turbine. For the same engine overall pressure ratio, the expansion ratio of the low-pressure turbine increases so as to reduce the hot jet velocity to match the reduction in the cold jet velocity from the lower fan pressure ratio. This increases the specific work of the low-pressure turbine slightly, despite the fact that it will be less efficient at a stage loading because of reduced blade heights and increased hub/tip ratios, tending to increase secondary flows and over-tip leakage in the low-pressure turbine. The efficiency of the core may also be compromised if accommodating a larger diameter fan shaft requires the rotational speed of the core to be reduced, and this would also tend to increase the internal secondary air flows required for disc-rim sealing. If the original engine needed 6 stages of low-pressure turbine, the lower specific thrust engine with 50% increased fan flow would typically need 9 stages.

In the two-part engine example with 50% increased total inlet mass flow the mass flow is evenly divided between the two smaller fans. Assuming the same inlet velocity and hub/tip ratio, the diameter of each fan scales down as the square root of half the total mass flow. The fan blade speeds are assumed to be the same as for the larger diameter single fan, but the fan rotational speeds are higher, though not as high as those of the original conventional engine. The two-part engine will not suffer the higher pressure loss associated with the mismatch between the fan exit hub radius and the core inlet hub radius, although it will have an extra duct loss between the two low-pressure turbines. Overall the two-part engine is expected to be at least as efficient as the big fan engine, but to need less core mass-flow because of reduced disc-rim sealing-air flows. This means that its low-pressure turbines should have slightly higher overall specific work. In this example the two low-pressure turbines are assumed to have similar mean radii, about 4% smaller than the state-of-the-art engine. For the same stage loadings as the other low-pressure turbines, each machine would require 4 stages. The smaller turbine exit radius should also reduce afterbody drag.

A further calculation in table 1 compares the number of low-pressure turbine blades and vanes, assuming they all have the same chord and space-to-chord ratios. The larger single fan engine would need 92% more low-pressure turbine blades, whereas the two-part engine only needs 28% more blades.

This comparison indicates that the two-part turbofan should have improved fuel economy and reduced weight relative to a conventional turbofan of the same specific thrust and that it is therefore a more attractive option for reducing specific thrust to improve propulsive efficiency.

Further developments of the core principles of the invention and the advantages attributed thereto are set out below.

The two-part engine arrangement could be applied to a future blended wing body aircraft (BWB) rather than to a conventional low-wing aircraft. In one such embodiment the first propulsion unit may be housed/buried in the wing root and the second unit may be mounted with a nacelle above the wing or fuselage. The first propulsion unit could also be buried or partly-buried in a wing root/fuselage portion of a conventional aircraft, provided structural considerations could be adequately accommodated. Any such configuration may avoid the need for the first nacelle and its associated installation drag.

The two-part engine arrangement could also potentially be applied to a high-wing aircraft.

Whilst mounting the first and second units forward and aft on a common pylon structure has the benefit of keeping a simpler and straighter first part of the inter-turbine duct and making the pylon more structurally efficient, it may also be possible to offset the aft engine-part laterally relative to the forward part. Aerodynamically, and from the cabin noise point of view, it might be beneficial to mount the aft unit further outboard than the forward unit on a conventional low-wing aircraft, or possibly further inboard on a high-wing or BWB type aircraft.

Possibly the first unit comprising the core engine could be mounted above and aft of the wing, whilst the second unit is mounted forward and below the wing. Accordingly the first low-pressure turbine exhaust would be turned around and ducted forwards. However this is a more torturous inter-turbine gas path or turbo-machinery layout and the engine arrangement would tend to move the overall powerplant centre of gravity further aft, which is generally less attractive for the aircraft.

The exhaust gasses of the first unit could be ducted to more than one more additional propulsion unit, particularly in a BWB type of aircraft, in order to realize a distributed propulsion system with multiple small fans. Optionally, if the port engine could power distributed propulsion on the starboard side, and vice versa, then the thrust asymmetry following an engine failure could be reduced, such that the size of the aircraft control surfaces might be reduced.

The first part of the engine might have a larger low-pressure turbine that also provides a shaft drive to additional propulsion systems, either in addition to, or possibly instead of, an inter-turbine duct and a remote low-pressure turbine or turbines for remote or distributed propulsion.

The first part of the engine might have a larger low-pressure turbine that also drives an electrical generator that provides electric power to additional propulsion systems, either in addition to, or possibly instead of, an inter-turbine duct and a remote low-pressure turbine or turbines.

Although the proposed engine configuration is in some ways an alternative to a geared fan engine, it is also possible to apply gearing to either the first fan or the second fan or both.

Further potential advantages of the invention may include a reduction in fan and low-pressure turbine noise by raising their frequencies so that noise is better attenuated. Also the natural net thrust line of the two-part engine may be brought closer to the centre of gravity of the aircraft, reducing the need for pitch and yaw trim as the thrust is varied.

## Claims

1. A gas turbine engine propulsion system (10) comprising:
a first propulsive unit (12) having a core engine and a first turbine arranged to be driven by combustion products from the core engine, the first propulsive unit further comprising a first fan rotor (32) and a first fan shaft drivingly connecting the first turbine and the first fan rotor,
wherein the propulsion system comprises a further turbine (22) arranged in flow series with the first turbine (24) and a second propulsive unit (18) spaced from the first propulsive unit, the second propulsive unit having a second fan rotor (28) driven by the rotational output of the further turbine;
wherein the first and second fan rotors comprise a parallel flow fan arrangement and the second fan rotor is driven by combustion products from the core engine via the further turbine;
wherein the first and second propulsion units include a respective nacelle (14, 20) and bypass fan duct and the further turbine is connected to the second fan rotor by a second fan shaft (30), the further turbine being located in the second propulsive unit.

2. A propulsion system according to any preceding claim, wherein the further turbine is downstream of the first turbine with respect to the flow of combustion products from the core engine, the first and further turbines being in fluid communication via an elongate inter-turbine duct (26) and wherein the further turbine is located in the second propulsive unit and the inter-turbine duct extends from the first propulsive unit to the second propulsive unit and conveys the exit flow from the first turbine to the second turbine.

3. A propulsion system according to either of claims 1 or 2, wherein the inter-turbine duct enters into the second propulsive unit through a housing thereof, the profile of the inter-turbine duct varying along its length, so as to present a region of increased aspect ratio as the inter-turbine duct crosses an air flow to or from the second fan rotor.

4. A propulsion system according to any one of claims 6 to 8, wherein the inter-turbine duct extends within a pylon structure for supporting both the first and second propulsive units in a relative orientation.

5. A propulsion system according to any one of claims 1-4, wherein the further turbine is arranged to drive a generator, the second fan rotor arranged to be driven by an electric motor, said motor being powered either directly or indirectly by the generator.

6. A propulsion system according to any preceding claim, wherein one of the first or second propulsive units is mounted beneath an aircraft wing (16), whereas the other of the first or second propulsive unit is mounted above the same wing.

7. A propulsion system according to any preceding claim wherein the first and/or further propulsion unit comprises a variable area propulsion nozzle to control flow through the bypass fan duct of the first or second propulsion unit.

8. A propulsion system according to any preceding claim wherein first propulsion unit comprises a variable area nozzle arranged to control flow from the first turbine to the further turbine so as to control the pressure there-between.

9. A propulsion system according to claim 8, wherein the variable area nozzle is controlled in dependence on desired rotational speeds of the respective first and second fan rotors.

10. A propulsion system according to any preceding claim, wherein the second propulsion unit comprises a thrust reverser.

11. A propulsion system according to any preceding claim, wherein the first and further turbines comprise low pressure turbines, the core engine comprising at least a high pressure compressor, a combustor and a high pressure turbine arranged in flow series.

12. A propulsion system according to any preceding claim, wherein first propulsion unit comprises any or any combination of an intercooler, a recuperator and/or an inter-turbine combustor.

13. A propulsion unit for an aircraft, the propulsion unit comprising:
a low pressure turbine drivingly connected to a fan rotor by a fan shaft, the turbine and fan being contained within a housing,
wherein the propulsion unit further comprises ducting passing to the low pressure turbine through the housing so as to allow supply of combustion products to the low pressure turbine from a gas turbine engine located remotely from the propulsion unit.

14. A propulsion unit according to claim 13, comprising a ducted fan, wherein the ducting for combustion products traverses the fan duct.

15. A propulsion unit according to claim 13 or claim 14, wherein the ducting for combustion products has a generally annular profile in a first portion thereof arranged for the supply of combustion products to the low pressure turbine and a second profile in a second portion thereof which traverses a propulsive airflow of the fan, the second portion having a higher aspect ratio than the first portion.
